# EUROPÄISCHE PATENTSCHRIFT

(11) **EP 1 221 587 B1**
(45) Veröffentlichungstag und Bekanntmachung des Hinweises auf die Patenterteilung: **31.03.2004**
(21) Anmeldenummer: 01130568.7
(22) Anmeldetag: 21.12.2001
(51) Int. Cl.: G01C 21/32, G08G 1/09

(54) **System und Verfahren zum Erstellen eines Navigationsdatenträgers**
System and method for creating a navigation data carrier
Système et procédé pour créer un support de données de navigation

(30) Priorität: 03.01.2001 DE 10100157
(43) Veröffentlichungstag der Anmeldung: 10.07.2002
(73) Patentinhaber: ROBERT BOSCH GMBH, 70442 Stuttgart (DE)
(72) Erfinder: Schmidt, Heinrich, Dr., 31199 Diekholzen (DE); Hoffmann, Ralf, 31137 Hildesheim (DE)

(56) Entgegenhaltungen:
- EP-A- 0 785 535
- DE-A- 19 832 035
- US-A- 5 535 125
- US-A- 5 734 780
- US-B1- 6 169 498
- PATENT ABSTRACTS OF JAPAN vol. 2000, no. 12, 3. Januar 2001 (2001-01-03) & JP 2000 251196 A (NEC CORP), 14. September 2000 (2000-09-14)
- PATENT ABSTRACTS OF JAPAN vol. 2000, no. 12, 3. Januar 2001 (2001-01-03) & JP 2000 250743 A (NEC CORP), 14. September 2000 (2000-09-14)

## Beschreibung

Die vorliegende Erfindung betrifft ein System sowie ein Verfahren zum Erstellen mindestens eines aktualisierte und/oder personalisierte Navigationsdaten und -informationen aufweisenden Datenträgers, insbesondere mindestens einer Compact Disc (CD) oder mindestens einer Digital Versatile Disc (DVD).

### Stand der Technik

In Fortbewegungsmitteln, wie beispielsweise in Flugzeugen, in Kraftfahrzeugen oder in Schiffen, fest installierte Navigationssysteme leiten einen Führer des Fortbewegungsmittels einfach, schnell und sicher an einen gewünschten Zielort, ohne daß der Führer des Fortbewegungsmittels vorher aufwendig eine Route planen und entsprechendes Kartenmaterial erwerben bzw. studieren muß.

Hierzu liegen entsprechende, beispielsweise auf Karten, Landkarten oder Straßenkarten basierende Navigationsdaten im Navigationssystem - auf einem Datenträger, insbesondere auf einer Compact Disc (CD) oder auf einer Digital Versatile Disc (DVD) gespeichert - vor. Das Navigationssystem nutzt beispielsweise GPS (= Global Positioning System), um den momentanen Standort des Fortbewegungsmittels festzustellen und entsprechende Navigationsanweisungen zu berechnen, die zu einem vorbestimmten Ziel führen.

In diesem Zusammenhang beinhalten die Navigationsdaten vorzugsweise Daten über Straßen und Wege für Kraftfahrzeuge; hierbei kommen in den Navigationssystemen entsprechende Algorithmen zur Routenberechnung zum Einsatz, die aus der Vorgabe eines Ausgangspunkts und eines Zielpunkts zusammen mit den gespeicherten Navigationsdaten eine optimale Route zur Fahrt vom Ausgangspunkt zum Zielpunkt errechnen.

Derartige Algorithmen zur Routenberechnung stützen sich beispielsweise auf sogenannte Bestwege-Algorithmen, die aus der Graphentheorie bekannt sind und die an die besonderen Anforderungen für den Einsatz in autarken Navigationssystemen angepaßt werden.

Im Zusammenhang mit derartigen Navigationssystemen erweist es sich jedoch als wesentlicher Nachteil, daß für derartige Navigationssysteme bislang nur Datenträger zur Verfügung stehen, die sich auf bestimmte Gebiete oder Regionen beziehen und bestimmte Kartendaten sowie eine allgemeine Anzahl sogenannter Punkte von besonderem Interesse (= POI = "points of interest") enthalten.

So ist es derzeit beispielsweise nicht realisierbar, sämtliche in der Bundesrepublik Deutschland existierenden "points of interest" der verschiedenen Kategorien auf einer Standard-Compact Disc, die ein Speichervolumen von etwa 650 MegaByte aufweist, unterzubringen; dies hat unweigerlich zur Folge, daß konventionellerweise von den Herstellern derartiger Navigationsdatenträger stets eine Auswahl vermutlich allgemein interessierender "points of interest", wie etwa Behörden, Hotels, Institutionen, Postämter, Restaurants und/oder Verwaltungen, getroffen werden muß.

Auch die Vermittlung ortsgenauer Angaben von Reiseführerinformationen oder dergleichen scheitert konventionellerweise am Übermaß der zur Verfügung stehenden Daten und Informationen.

So ist die Zusammenstellung bestimmter "points of interest" oder auch bestimmter Attribute für Straßen, wie etwa "Ferienstraße" oder "Weinstraße", für eine bestimmte Region auf dem Navigationsdatenträger aufgrund der Daten- und Informationsfülle und der daraus resultierenden großen Anzahl von Kombinationsmöglichkeiten für den Hersteller des Datenträgers nahezu unmöglich, in jedem Falle jedoch nicht wirtschaftlich.

In diesem Zusammenhang ist zu berücksichtigen, daß nicht nur die Datenund Informationsvielfalt, sondern auch die Daten- und Informationsaktualität ein nicht unwesentliches Problem darstellt. Durch den bei der Datenerfassung benötigten Zeitaufwand sind viele der zuerst erfassten Daten schon bei Herausgabe des Datenträgers überholt.

So ist es im Regelfall nicht mehr möglich, die Navigationsdaten und -informationen von ganz Europa auf einem Informationsträger unterzubringen; selbst Informationsträger mit lediglich einer Auswahl von einigen Ländern sind nur in Einzelfällen realisierbar.

Auch für das Gebiet der Bundesrepublik Deutschland wird aufgrund der zunehmenden Detaillierung der zur Verfügung stehenden Daten und Informationen schon bald der unerwünschte Fall eintreten, daß die Speicherkapazität einer konventionellen Compact Disc nicht mehr für alle Daten und Informationen ausreicht.

DE-A-198 32 035 offenbart ein Fahrzeugnavigationsgerät mit einer fahrzeugfesten Kartendatenbank, in der Kartendaten in kleinem Maßstab, also vorwiegend Daten übergeordneter Straßen bereitgehalten werden. Eine Routenberechnung erfolgt zunächst auf Grundlage dieser wenig detaillierten Kartendaten. Auf eine Anforderung des Fahrzeugnavigationsgeräts, beispielsweise bei Annäherung des Fahrzeugstandorts an den Zielort oder bei Abweichung von der berechneten Route, werden über eine Kommunikationsschnittstelle von einem Server Kartendaten der aktuellen Fahnxugumgebung in großem Maßstab, also detailliertere Kartendaten, in einen Schreib-/Lesespeicher des Fahrzeugsnavigationsgeräts geladen und die Navigation auf Grundlage dieser detaillierteren Kartendaten durchgeführt.

Patent Abstract of Japan zu JP 2000 250743 offenbart ein Client-Server-System, bei dem die Versionen der Inhalte von client- und serverseitig vorgesehenen Festplattenlaufwerken regelmäßig miteinander verglichen werden und bei Abweichungen gegebenenfalls die clientseitigen Inhalte auf den Stand des serverseitigen Laufwerks aktualisiert werden.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein System sowie ein Verfahren bereitzustellen, durch die die wirtschaftliche Herstellung von spezifischen, mit aktuellen Navigationsdaten und -informationen versehenen Datenträgern ermöglicht wird. In diesem Zusammenhang zielt die vorliegende Erfindung auch darauf ab, sowohl dem immer dringlicheren Problem der Navigationsdatenfülle als auch dem stets virulenten Problem der Navigationsdatenaktualität zu begegnen.

Diese Aufgabe wird gemäß der Lehre der vorliegenden Erfindung durch ein System mit den im Anspruch 1 genannten Merkmalen sowie durch ein Verfahren mit den im Anspruch 14 genannten Merkmalen gelöst. Vorteilhafte Ausgestaltungen und zweckmäßige Weiterbildungen des vorliegenden Verfahrens sind in den jeweiligen Unteransprüchen gekennzeichnet.

Mithin ist der Kern der vorliegenden Erfindung in dem Kriterium zu sehen, daß bei der Herstellung bzw. Auslieferung ein Standard-Datenträger, beispielsweise eine Standard-Compact Disc oder eine Standard-Digital Versatile Disc, mit einem "Gerüst" von Grobdaten und -informationen (= weniger aktuelle und/oder weniger personalisierte, das heißt im Laufe der Zeit veraltete und/oder zu allgemein gehaltene Navigationsdaten und -informationen) versehen wird. Der Benutzer kann sich dann in einem zweiten Schritt auf der Benutzereinheit einen seinen persönlichen Bedürfnissen entsprechenden Datenträger mit personalisierten Navigationsdaten und -informationen erstellen.

Diese Aktualisierung und Personalisierung der Navigationsdaten und -informationen kann auch unter Zuhilfenahme eines (kommerziellen) Dienstleisters erfolgen, so daß vom Benutzer selbst - oder eben von einem Dienstleister - zu einem späteren Zeitpunkt eine Aktualisierung der sich auf dem Navigationsdatenträger befindlichen Daten und Informationen vorgenommen werden kann.

Der Fachmann auf dem Gebiet der Navigationsdatenverarbeitung wird mithin bei der vorliegenden Erfindung besonders zu schätzen wissen, daß der Benutzer unter Einsatz seiner Benutzereinheit, eines Zugangs zu elektronischen Daten- oder Kommunikationsnetzen, insbesondere eines Internetzugangs, und eines Schreiblaufwerks der Benutzereinheit in die Lage versetzt wird, seinen individuell spezifizierten und aktualisierten Navigationsdatenträger zu erstellen, insbesondere zu brennen. Hierzu muß die Benutzereinheit lediglich ein vorzugsweise schnelles Leselaufwerk und ein vorzugsweise ebenfalls schnelles Schreiblaufwerk aufweisen, was beides heutzutage üblicherweise der Fall ist.

Gemäß einer bevorzugten Ausgestaltungsform der vorliegenden Erfindung kann der Benutzer der Benutzereinheit bei Bedarf, das heißt beispielsweise im Rahmen seiner persönlichen Urlaubsplanung, über die elektronischen Daten- oder Kommunikationsnetze, insbesondere über das Internet (WWW = World Wide Web) Kontakt zu einer speziell hierfür eingerichteten Website, etwa der Website des Herstellers des Standard-Datenträgers, aufnehmen und sich über eine individuelle Registrierungsnummer (= User-ID = user identification number) authentifizieren, die der Benutzer mit dem Erwerb des Standard-Datenträgers erhalten hat.

Ist der Benutzer nun angemeldet, so kann er in zweckmäßiger Weise über mindestens eine Menüführung oder über mindestens eine Karte, insbesondere über mindestens eine Landkarte oder Routenkarte, das jeweilige Gebiet oder die jeweilige Region, für die der Benutzer weiterreichende Daten und Informationen wünscht, anwählen. Hierfür kann der Benutzer in einem nächsten Schritt interessante Straßenattribute und/oder bevorzugte "points of interest" sowie neueste Daten und Informationen etwa zu Hotels, Restaurants oder Sehenswürdigkeiten anwählen ("anklicken") und im Bedarfsfalle auch auf der Anzeigeeinheit (im Regelfall Bildschirm oder Monitor) seiner Benutzereinheit ansehen. Sind die visualisierten Navigationsdaten und -informationen im Sinne des Benutzers, so kann er diese zumindest partiell übernehmen, beispielsweise indem er diese in seinen virtuellen elektronischen Einkaufskorb legt.

Gemäß einer vorteilhaften Ausgestaltungsform der vorliegenden Erfindung werden hierbei bestimmte Attribute, "points of interest" oder aktuelle Zusatzdaten und -informationen als Einzelauswahl oder als bereits vorbereitete Paketauswahl angeboten. Im einfachsten Falle, wenn der Benutzer seine auf dem Standard-Datenträger vorhandenen Daten und Informationen lediglich auf den neuesten Stand bringen will, genügt mithin eine entsprechende Anwahl, das heißt ein Mausklick auf einen "Update-Button" in der Menüauswahl.

Wenn der Benutzer seine Auswahl, beispielsweise entlang der beabsichtigten Reiseroute oder für die geplante Urlaubsregion, beendet hat, so werden in zweckmäßiger Weise alle sich beispielsweise im virtuellen elektronischen Einkaufskorb befindlichen Produkte bewertet, und der Provider der ausgewählten Navigationsdaten und -informationen legt den entsprechenden Preis fest. Nach wirksamem Bestellen, beispielsweise durch Drücken des Bestell-"Buttons" in der Menüführung, erstellt der Provider basierend auf den ausgewählten Navigationsdaten und -informationen eine spezielle Datei zum "Herunterladen".

Hierzu kann in bevorzugter Weise der genaue Versionsstand des im Leselaufwerk der Benutzereinheit eingelegten Standard-Navigationsdatenträgers ausgelesen werden; sodann wird die Differenz zwischen diesem genauen Versionsstand und den vom Benutzer ausgewählten aktuellen und personalisierten Navigationsdaten und-informationen bestimmt. Lediglich diese Differenzdaten und -informationen, nicht jedoch die gesamten Navigationsdaten und -informationen (wie etwa die vollständige digitale Karte) werden dann in einer Datei zum Herunterladen, einem sogenannten "Download-File", zusammengestellt.

Gemäß einer vorteilhaften Ausgestaltungsform wird der Benutzer des vorliegenden Systems mittels mindestens einer elektronischen Nachricht, insbesondere mittels mindestens einer eMail (= Electronic Mail) oder mittels mindestens einer SMS-Nachricht (SMS = Short Message Service), vom Hersteller des Standard-Navigationsdatenträgers benachrichtigt; in dieser elektronischen Nachricht kann entweder eine individuelle, mit Paßwort versehene und der Basiseinheit zugeordnete Internetadresse (URL = Uniform Resource Locator) angegeben sein, von der die persönliche Datei auf die Benutzereinheit geladen werden kann, oder die aktualisierten und/oder personalisierten Navigationsdaten und -informationen werden unmittelbar als Anhang bzw. als Anlage ("attachment file") an die Benachrichtigung angefügt.

In einer besonders vorteilhaften Ausbaustufe der vorliegenden Erfindung werden die aktualisierten und/oder personalisierten Navigationsdaten und - informationen online unmittelbar im Anschluß an die Anforderung erstellt; dies setzt allerdings einen hinreichend schnellen Operationsmodus der Prozessoreinheit der Basiseinheit voraus, was zweckmäßigerweise durch eine Parallelschaltung mehrerer Prozessoreinheiten in der Basiseinheit erzielbar ist.

Nachdem die aktualisierten und/oder personalisierten Navigationsdaten und -informationen auf die Benutzereinheit heruntergeladen sind, das heißt, nachdem die Differenzdaten und -informationen über die elektronischen Daten- oder Kommunikationsnetze an die Benutzereinheit übermittelt sind, werden mittels des Schreiblaufwerks der Benutzereinheit die Differenzdaten und -informationen auf den mit den aktualisierten und/oder personalisierten Navigationsdaten und -informationen zu versehenden Datenträger geschrieben:

Hierzu wird im einzelnen zunächst der Standard-Navigationsdatenträger in das Leselaufwerk der Benutzereinheit eingelegt; in gleicher Weise wird der mit den aktualisierten und/oder personalisierten Navigationsdaten und - informationen zu versehende Datenträger in das Schreiblaufwerk der Benutzereinheit eingelegt; nunmehr wird ein spezielles Datenverarbeitungsprogramm des Providers gestartet, das zunächst die Standard-Navigationsdaten und -informationen des Standard-Navigationsdatenträgers mit den zusätzlichen Navigationsdaten und -informationen der heruntergeladenen Datei in geeigneter Weise verknüpft und zweckmäßigerweise ein "Image" für den zu erstellenden, mit den aktualisierten und/oder personalisierten Navigationsdaten und-informationen zu versehenden Datenträger anlegt.

Nachdem alle erforderlichen Berechnungen sowie sämtliche relevanten Konvertierungen abgeschlossen sind, wird das Schreiblaufwerk der Benutzereinheit gestartet, und es wird der die aktualisierten und/oder personalisierten Navigationsdaten und -informationen aufweisende Datenträger, der für sich genommen ein Unikat darstellt, durch Brennen erstellt.

Die vorliegende Erfindung betrifft schließlich einen aktualisierte und/oder personalisierte Navigationsdaten und -informationen aufweisenden Datenträger, insbesondere Compact Disc (CD) oder Digital Versatile Disc (DVD), erstellt mit einem System mit den vorstehend dargelegten Merkmalen und/oder mittels eines Verfahrens mit den vorstehend dargelegten Schritten.

Mit diesem neuen, aktualisierten und/oder personalisierten Navigationsdatenträger stehen dem Benutzer der Benutzereinheit neben den Standardfunktionen des konventionellen Standard-Navigationsdatenträgers auch die individualisierten, persönlichen und speziellen Daten und Informationen in einem Navigationssystem zur Verfügung.

### Kurze Beschreibung der Zeichnungen

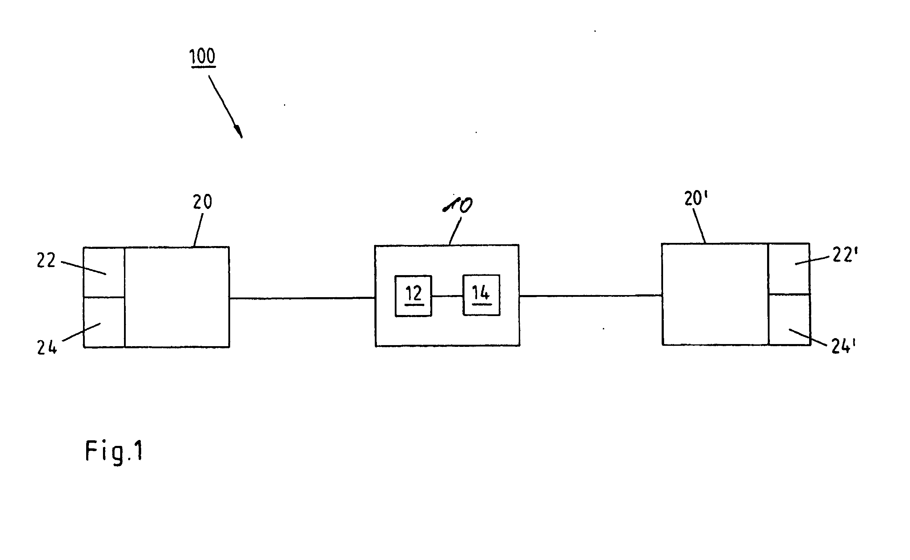

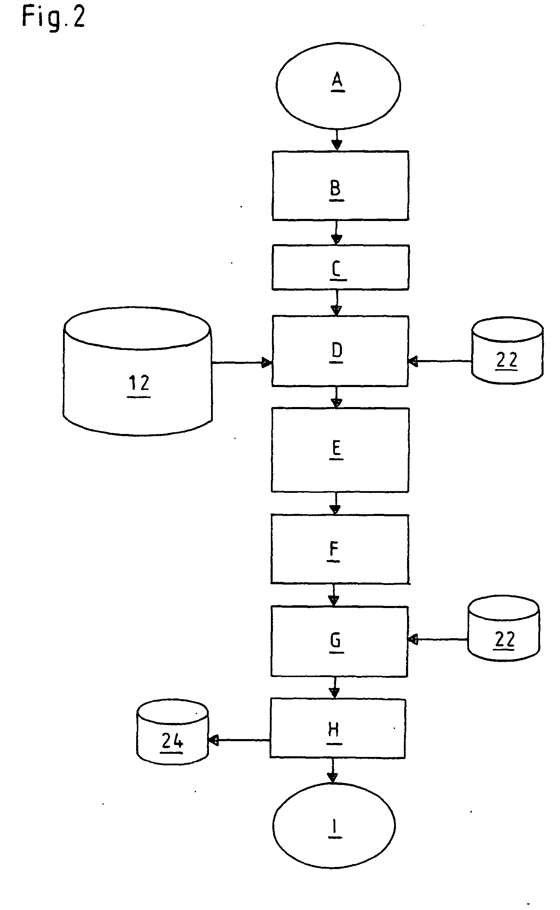

Weitere Ausgestaltungen, Merkmale und Vorteile der vorliegenden Erfindung werden nachstehend anhand des durch die Figuren 1 und 2 veranschaulichten Ausführungsbeispiels näher erläutert. Es zeigt:
- Fig. 1: ein Ausführungsbeispiel eines Systems gemäß der vorliegenden Erfindung, in schematischer Prinzipdarstellung; und
- Fig. 2: ein Ablaufdiagramm für ein Verfahren gemäß der vorliegenden Erfindung, ebenfalls in schematischer Prinzipdarstellung.

Gleiche oder ähnliche Ausgestaltungen, Elemente oder Merkmale sind in den Figuren 1 und 2 mit identischen Bezugszeichen versehen.

### Bester Weg zur Ausführung der Erfindung

In Figur 1 ist ein Ausführungsbeispiel für ein System 100 zum Erstellen einer aktualisierte und personalisierte Navigationsdaten und -informationen aufweisenden Compact Disc (CD) dargestellt; dieses System 100 arbeitet gemäß einem Verfahren, wie es anhand Figur 2 veranschaulicht ist.

Nachdem das System 100 gestartet ist (--> Verfahrensschritt A in Figur 2), wählt der Benutzer einer als elektronische Datenverarbeitungsvorrichtung, im speziellen als Clienteinheit oder Terminaleinheit ausgebildeten Benutzereinheit 20 aus zentralen Navigationsdaten und -informationen, die mittels einer ebenfalls als elektronische Datenverarbeitungsvorrichtung, im speziellen als Servereinheit ausgebildeten Basiseinheit 10 verwaltet, bereitgestellt und geliefert werden, geeignete Daten und Attribute aus (--> Verfahrensschritt B in Figur 2). Diese zentralen Navigationsdaten und -informationen sind in einer der Speichereinheit 12 der Basiseinheit 10 zugeordneten elektronischen Bibliothek bzw. in einem der Speichereinheit 12 der Basiseinheit 10 zugeordneten elektronischen Katalog kategorisiert.

Wenn nun diese Auswahl der gewünschten Navigationsdaten und -informationen einschließlich der passenden Attribute getroffen ist, erfolgt eine Bestellung durch den Benutzer der Benutzereinheit 20 (--> Verfahrensschritt C in Figur 2). Daraufhin wird eine Compact Disc, die weniger aktuelle und weniger personalisierte, das heißt im Laufe der Zeit veraltete und zu allgemein gehaltene Navigationsdaten und -informationen enthält, mittels eines Leselaufwerks 22 der Benutzereinheit 20 gelesen.

Die vom Leselaufwerk 22 der Benutzereinheit 20 ausgelesenen, weniger aktuellen und weniger personalisierten Navigationsdaten und -informationen werden mittels einer Prozessoreinheit 14 der Basiseinheit 10 mit den in einer Speichereinheit 12 der Basiseinheit 10 gespeicherten zentralen Navigationsdaten und -informationen verglichen (--> Verfahrensschritt D in Figur 2).

Daraufhin erfolgt ebenfalls mittels der Prozessoreinheit 14 ein Erstellen und Bereitstellen von Differenzdaten und -informationen, die sich als "Unterschied" zwischen den zentralen Navigationsdaten und -informationen und den weniger aktuellen und weniger personalisierten Navigationsdaten und -informationen ergeben (--> Verfahrensschritt E in Figur 2). Diese Differenzdaten und -informationen werden sodann an die Benutzereinheit 20 übermittelt, das heißt der Benutzer der Benutzereinheit 20 lädt auf seine Anforderung hin die Differenzdaten und -informationen über das Internet mittels FTP (= File Transfer Protocol) oder mittels HTTP (= Hypertext Transfer Protocol) auf seine Benutzereinheit 20 (--> Verfahrensschritt F in Figur 2; sogenannter "Download" der Differenzdaten und -informationen, beispielsweise in Form einer Datei).

Nachdem für die zu erstellende Compact Disc - ausgehend von der die weniger aktuellen und weniger personalisierten Navigationsdaten und -informationen enthaltenden Compact Disc und auf der Grundlage der von der Basiseinheit 10 heruntergeladenen Differenzdaten und -informationen - eine neue Datei vorbereitet und erstellt worden ist (--> Verfahrensschritt G in Figur 2), werden mittels des Schreiblaufwerks 24 der Benutzereinheit 20 die Differenzdaten und -informationen auf die mit den aktualisierten und personalisierten Navigationsdaten und -informationen zu versehende Compact Disc geschrieben (--> Verfahrensschritt H in Figur 2). Damit ist das Verfahren beendet (--> Verfahrensschritt J in Figur 2).

Wie der Darstellung der Figur 1 unter anderem entnehmbar ist, beruht das vorliegende System 100 darauf, daß nicht nur eine Benutzereinheit 20, sondern eine Mehrzahl oder Vielzahl von Benutzereinheiten am System 100 teilnehmen können; aus diesem Grunde ist im Ausführungsbeispiel der Figur 1 exemplarisch noch eine zweite Benutzereinheit 20' dargestellt, die die Mehrzahl oder Vielzahl von Benutzereinheiten symbolisiert. Diese Benutzereinheiten 20, 20' stehen mit der Basiseinheit 10 über die elektronischen Daten- oder Kommunikationsnetze, im speziellen über das Internet (WWW = World Wide Web), in Verbindung.

In diesem Zusammenhang kommt der Basiseinheit 10 unter anderem auch die Funktion zu, die Benutzereinheiten 20, 20', im speziellen die Adressen der Benutzereinheiten 20, 20', zu verwalten. Zum Verwalten der Benutzereinheiten 20, 20' wie auch zum Verwalten, Bereitstellen und Liefern der zentralen Navigationsdaten und -informationen ist eine Datenbank, im speziellen eine Datenbank auf SQL-Basis (SQL = structured query language = strukturierte Abfragesprache) eingerichtet, die der Basiseinheit 10 zugeordnet und in der Basiseinheit 10 implementiert ist. Zur Gewährleistung einer reibungslosen Kommunikation zwischen der Basiseinheit 10 und den Benutzereinheiten 20, 20' ist in der Basiseinheit 10 ferner ein Schnittstellenmodul, insbesondere auf Perl-Basis oder auf CGI-Basis (CGI = Common Gateway Interface), implementiert.

Abschließend sei ergänzt, daß in den vorstehenden Erläuterungen zum Ausführungsbeispiel gemäß den Figuren 1 und 2 von einem Leselaufwerk 22 und von einem Schreiblaufwerk 24 gesprochen wird. Gemäß einer erfindungswesentlichen Eigenschaft der vorliegenden Erfindung können das Leselaufwerk 22 und das Schreiblaufwerk 24 auch einheitlich als ein einstückiges, in der Benutzereinheit 20 integriertes Lese-Schreib-Laufwerk für wiederbeschreibbare Compact Discs (= CDs-RW = Compact Discs ReWrite) ausgebildet sein.

In letzterem Falle handelt es sich demzufolge bei der zu erstellenden Compact Disc um einen Standard-Datenträger, auf dem die weniger aktuellen und weniger personalisierten, das heißt im Laufe der Zeit veralteten und zu allgemein gehaltenen Navigationsdaten und -informationen mittels des CD-RW-Laufwerks mit den aktualisierten und personalisierten Navigationsdaten und -informationen überschrieben werden.

### Bezugszeichenliste

- 100: System
- 10: Basiseinheit
- 12: Speichereinheit der Basiseinheit 10
- 14: Prozessoreinheit der Basiseinheit 10
- 20, 20': Benutzereinheiten
- 22: Leselaufwerk der Benutzereinheit 20
- 22': Leselaufwerk der Benutzereinheit 20'
- 24: Schreiblaufwerk der Benutzereinheit 20
- 24': Schreiblaufwerk der Benutzereinheit 20'

## Patentansprüche

1. System (100) zum Erstellen mindestens eines aktualisierte und/oder personalisierte Navigationsdaten und -informationen aufweisenden Datenträgers, insbesondere mindestens einer Compact Disc oder mindestens einer Digital Versatile Disc, aufweisend
- mindestens eine Basiseinheit (10) zum Verwalten, Bereitstellen und Liefern von zentralen Navigationsdaten und -informationen, welche Basiseinheit (10)
-- mindestens eine Speichereinheit (12) und
-- mindestens eine Prozessoreinheit (14) aufweist, und
- mindestens eine mit der Basiseinheit (10) über elektronische Daten- oder Kommunikationsnetze in Verbindung stehende Benutzereinheit (20, 20') zum Erstellen des die aktualisierten und/oder personalisierten Navigationsdaten und -informationen aufweisenden Datenträgers, welche Benutzereinheit (20, 20')
-- mindestens ein Leselaufwerk (22) zum Lesen mindestens eines weniger aktuelle und/oder weniger personalisierte Navigationsdaten und -informationen aufweisenden Datenträgers und
-- mindestens ein Schreiblaufwerk (24) zum Erstellen des die aktualisierten und/oder personalisierten Navigationsdaten und -informationen aufweisenden Datenträgers
aufweist,
wobei
- die Basiseinheit (10)
-- zum in der Prozessoreinheit (14) vorgesehenen Vergleichen der in der Speichereinheit (12) der Basiseinheit (10) gespeicherten zentralen Navigationsdaten und -informationen mit den vom Leselaufwerk (22) der Benutzereinheit (20, 20') ausgelesenen, weniger aktuellen und/oder weniger personalisierten Navigationsdaten und -informationen,
-- zum in der Prozessoreinheit (14) vorgesehenen Erstellen und Bereitstellen von Differenzdaten und -informationen zwischen den zentralen Navigationsdaten und -informationen und den weniger aktuellen und/oder weniger personalisierten Navigationsdaten und -informationen sowie
-- zum Übermitteln der Differenzdaten und -informationen über die elektronischen Daten- oder Kommunikationsnetze an die Benutzereinheit (20, 20') ausgelegt ist, und
- die Benutzereinheit (20, 20') zum mittels des Schreiblaufwerks (24) vorgesehenen Schreiben der Differenzdaten und -informationen auf den mit den aktualisierten und/oder personalisierten Navigationsdaten und -informationen zu versehenden Datenträger ausgelegt ist.

2. System (100) gemäß Anspruch 1, **dadurch gekennzeichnet, daß** die Basiseinheit (10) zum Verwalten der Benutzereinheiten (20, 20'), insbesondere der Adressen der Benutzereinheiten (20, 20'), ausgelegt ist.

3. System (100) gemäß Anspruch 1 oder 2, **dadurch gekennzeichnet, daß** die zentralen Navigationsdaten und -informationen
- in mindestens einer der Speichereinheit (12) der Basiseinheit (10) zugeordneten elektronischen Bibliothek und/oder
- in mindestens einem der Speichereinheit (12) der Basiseinheit (10) zugeordneten elektronischen Katalog
kategorisierbar sind.

4. System (100) gemäß mindestens einem der Ansprüche 1 bis 3, **dadurch gekennzeichnet, daß** die Differenzdaten und -informationen auf Anforderung durch die Benutzereinheit (20, 20') von der Basiseinheit (10) zur Benutzereinheit (20, 20') transferierbar sind.

5. System (100) gemäß mindestens einem der Ansprüche 1 bis 4, **dadurch gekennzeichnet, daß** die Differenzdaten und -informationen in Form mindestens einer Datei über die elektronischen Daten- oder Kommunikationsnetze an die Benutzereinheit (20, 20') übermittelbar sind.

6. System (100) gemäß mindestens einem der Ansprüche 1 bis 5, **dadurch gekennzeichnet, daß** das Übermitteln der Differenzdaten und -informationen von der Basiseinheit (10) zur Benutzereinheit (20, 20') zumindest partiell
- auf Applet-Basis und/oder auf Servlet-Basis erfolgt und/oder
- auf dem FTP-Standard basiert und/oder
- auf dem HTML-Standard basiert und/oder
- auf dem HTTP-Standard, insbesondere auf dem Secure-HTTP-Standard, basiert und/oder
- auf dem SMTP-Standard basiert und/oder
- auf dem TCP/IP-Standard basiert.

7. System (100) gemäß mindestens einem der Ansprüche 1 bis 6, **dadurch gekennzeichnet, daß**
- zum Verwalten, Bereitstellen und Liefern der zentralen Navigationsdaten und -informationen; und/oder
- zum Verwalten der Benutzereinheiten (20, 20'), insbesondere der Adressen der Benutzereinheiten (20, 20') mindestens eine Datenbank, insbesondere mindestens eine Datenbank auf SQL-Basis und/oder mindestens eine Datenbank auf JDBC-Basis, vorgesehen ist.

8. System (100) gemäß Anspruch 7, **dadurch gekennzeichnet, daß** die Datenbank
- der Basiseinheit (10) zugeordnet und/oder
- in der Basiseinheit (10) implementiert
ist.

9. System (100) gemäß Anspruch 7 oder 8, **dadurch gekennzeichnet, daß** in der Basiseinheit (10) mindestens ein Schnittstellenmodul, insbesondere auf Perl-Basis und/oder auf CGI-Basis, implementiert ist.

10. System (100) gemäß mindestens einem der Ansprüche 1 bis 9, **dadurch gekennzeichnet, daß**
- die Basiseinheit (10) und/oder
- die Benutzereinheit (20, 20')
jeweils als mindestens eine elektronische Datenverarbeitungsvorrichtung ausgebildet sind.

11. System (100) gemäß mindestens einem der Ansprüche 1 bis 10, **dadurch gekennzeichnet, daß** die Basiseinheit (10) als mindestens eine Servereinheit ausgebildet ist.

12. System (100) gemäß mindestens einem der Ansprüche 1 bis 11, **dadurch gekennzeichnet, daß** die Benutzereinheit (20, 20') jeweils als mindestens eine Clienteinheit oder als mindestens eine Terminaleinheit ausgebildet ist.

13. System (100) gemäß mindestens einem der Ansprüche 1 bis 12, **dadurch gekennzeichnet, daß** das Leselaufwerk (22) und das Schreiblaufwerk (24) einheitlich und/oder einstückig und/oder integriert, insbesondere als Lese-Schreib-Laufwerk, ausgebildet sind.

14. Verfahren zum Erstellen mindestens eines aktualisierte und/oder personalisierte Navigationsdaten und -informationen aufweisenden Datenträgers, insbesondere mindestens einer Compact Disc oder mindestens einer Digital Versatile Disc, aufweisend die folgenden Schritte:
- Verwalten, Bereitstellen und Liefern von zentralen Navigationsdaten und -informationen mittels mindestens einer Basiseinheit (10);
- Lesen mindestens eines weniger aktuelle und/oder weniger personalisierte Navigationsdaten und -informationen aufweisenden Datenträgers mittels mindestens eines Leselaufwerks (22) mindestens einer mit der Basiseinheit (10) über elektronische Daten- oder Kommunikationsnetze in Verbindung stehenden Benutzereinheit (20, 20');
- Vergleichen von in mindestens einer Speichereinheit (12) der Basiseinheit (10) gespeicherten zentralen Navigationsdaten und -informationen mit den vom Leselaufwerk (22) der Benutzereinheit (20, 20') ausgelesenen, weniger aktuellen und/oder weniger personalisierten Navigationsdaten und -informationen mittels mindestens einer Prozessoreinheit (14) der Basiseinheit (10);
- Erstellen und Bereitstellen von Differenzdaten und -informationen zwischen den zentralen Navigationsdaten und -informationen und den weniger aktuellen und/oder weniger personalisierten Navigationsdaten und -informationen mittels der Prozessoreinheit (14);
- Übermitteln der Differenzdaten und -informationen über die elektronischen Daten- oder Kommunikationsnetze von der Basiseinheit an die Benutzereinheit (20, 20'); und
- Schreiben der Differenzdaten und -informationen auf den mit den aktualisierten und/oder personalisierten Navigationsdaten und-informationen zu versehenden Datenträger mittels eines Schreiblaufwerks (24) der Benutzereinheit (20, 20').

15. Verfahren gemäß Anspruch 14, **dadurch gekennzeichnet, daß** die Benutzereinheiten (20, 20'), insbesondere die Adressen der Benutzereinheiten (20, 20'), mittels der Basiseinheit (10) verwaltet werden.

16. Verfahren gemäß Anspruch 14 oder 15, **dadurch gekennzeichnet, daß** die zentralen Navigationsdaten und -informationen
- in mindestens einer der Speichereinheit (12) der Basiseinheit (10) zugeordneten elektronischen Bibliothek und/oder
- in mindestens einem der Speichereinheit (12) der Basiseinheit (10) zugeordneten elektronischen Katalog kategorisiert werden.

17. Verfahren gemäß mindestens einem der Ansprüche 14 bis 16, **dadurch gekennzeichnet, daß** die Differenzdaten und -informationen auf Anforderung durch die Benutzereinheit (20, 20') von der Basiseinheit (10) zur Benutzereinheit (20, 20') transferiert werden.

18. Verfahren gemäß mindestens einem der Ansprüche 14 bis 17, **dadurch gekennzeichnet, daß** die Differenzdaten und -informationen in Form mindestens einer Datei über die elektronischen Datenoder Kommunikationsnetze an die Benutzereinheit (20, 20') übermittelt werden.

19. Verfahren gemäß mindestens einem der Ansprüche 14 bis 18, **dadurch gekennzeichnet, daß** die Differenzdaten und -informationen zumindest partiell
- auf Applet-Basis und/oder auf Servlet-Basis und/oder
- auf dem FTP-Standard und/oder
- auf dem HTML-Standard und/oder
- auf dem HTTP-Standard, insbesondere auf dem Secure-HTTP-Standard, und/oder
- auf dem SMTP-Standard und/oder
- auf dem TCP/IP-Standard von der Basiseinheit (10) zur Benutzereinheit (20, 20') übermittelt werden.

20. Verfahren gemäß mindestens einem der Ansprüche 14 bis 19, **dadurch gekennzeichnet, daß**
- zum Verwalten, Bereitstellen und Liefern der zentralen Navigationsdaten und -informationen; und/oder
- zum Verwalten der Benutzereinheiten (20, 20'), insbesondere der Adressen der Benutzereinheiten (20, 20') mindestens eine Datenbank, insbesondere mindestens eine Datenbank auf SQL-Basis und/oder mindestens eine Datenbank auf JDBC-Basis, vorgesehen wird.

21. Verfahren gemäß Anspruch 20, **dadurch gekennzeichnet, daß** die Datenbank
- der Basiseinheit (10) zugeordnet und/oder
- in der Basiseinheit (10) implementiert wird.

22. Verfahren gemäß Anspruch 20 oder 21, **dadurch gekennzeichnet, daß** in der Basiseinheit (10) mindestens ein Schnittstellenmodul, insbesondere auf Perl-Basis und/oder auf CGI-Basis, implementiert wird.

23. Verfahren gemäß mindestens einem der Ansprüche 14 bis 22, **dadurch gekennzeichnet, daß**
- die Basiseinheit (10) und/oder
- die Benutzereinheit (20, 20') jeweils als mindestens eine elektronische Datenverarbeitungsvorrichtung ausgebildet wird.

24. Verfahren gemäß mindestens einem der Ansprüche 14 bis 23, **dadurch gekennzeichnet, daß** die Basiseinheit (10) als mindestens eine Servereinheit ausgebildet wird.

25. Verfahren gemäß mindestens einem der Ansprüche 14 bis 24, **dadurch gekennzeichnet, daß** die Benutzereinheit (20, 20') jeweils als mindestens eine Clienteinheit oder als mindestens eine Terminaleinheit ausgebildet wird.

26. Verfahren gemäß mindestens einem der Ansprüche 14 bis 25, **dadurch gekennzeichnet, daß** das Leselaufwerk (22) und das Schreiblaufwerk (24) einheitlich und/oder einstückig und/oder integriert, insbesondere als Lese-Schreib-Laufwerk, ausgebildet werden.

27. Aktualisierte und/oder personalisierte Navigationsdaten und -informationen aufweisender Datenträger, insbesondere Compact Disc oder Digital Versatile Disc, erstellt mit einem System (100) gemäß mindestens einem der Ansprüche 1 bis 13 und/oder mittels eines Verfahrens gemäß mindestens einem der Ansprüche 14 bis 26.

## Claims

1. System (100) for creating at least one data storage medium holding updated and/or personalized navigation data and information, particularly at least one compact disc or at least one digital versatile disc, having
- at least one base unit (10) for managing, providing and supplying central navigation data and information, which base unit (10)
-- has at least one memory unit (12) and
-- at least one processor unit (14) and
- at least one user unit (20, 20'), connected to the base unit (10) via electronic data or communication networks, for creating the data storage medium holding the updated and/or personalized navigation data and information, which user unit (20, 20')
-- has at least one reading drive (22) for reading at least one data storage medium holding less up-to-date and/or less personalized navigation data and information, and
-- at least one writing drive (24) for creating the data storage medium holding the updated and/or personalized navigation data and information,
where
- the base unit (10) is designed
- - for comparing the central navigation data and information stored in the memory unit (12) in the base unit (10) with the less up-to-date and/or less personalized navigation data and information read out by the reading drive (22) in the user unit (20, 20'), as provided in the processor unit (14),
-- for creating and providing difference data and information between the central navigation data and information and the less up-to-date and/or less personalized navigation data and information, as provided in the processor unit (14), and also
-- for transmitting the difference data and information to the user unit (20, 20') via the electronic data or communication networks, and
- the user unit (20, 20') is designed for writing the difference data and information to the data storage medium which is to be provided with the updated and/or personalized navigation data and information, as provided by means of the writing drive (24).

2. System (100) according to Claim 1, **characterized in that** the base unit (10) is designed for managing the user units (20, 20'), particularly the addresses of the user units (20, 20').

3. System (100) according to Claim 1 or 2, **characterized in that** the central navigation data and information can be categorized
- into at least one electronic library associated with the memory unit (12) in the base unit (10) and/or
- into at least one electronic catalogue associated with the memory unit (12) in the base unit (10).

4. System (100) according to at least one of Claims 1 to 3, **characterized in that** the difference data and information can be transferred from the base unit (10) to the user unit (20, 20') at the request of the user unit (20, 20').

5. System (100) according to at least one of Claims 1 to 4, **characterized in that** the difference data and information can be transmitted in the form of at least one file to the user unit (20, 20') via the electronic data or communication networks.

6. System (100) according to at least one of Claims 1 to 5, **characterized in that** transmission of the difference data and information from the base unit (10) to the user unit (20, 20') is, at least in part,
- effected on an applet basis and/or on a servlet basis and/or
- based on the FTP standard and/or
- based on the HTML standard and/or
- based on the HTTP standard, particularly on the secure HTTP standard, and/or
- based on the SMTP standard and/or
- based on the TCP/IP standard.

7. System (100) according to at least one of Claims 1 to 6, **characterized in that**
- management, provision and supply of the central navigation data and information; and/or
- management of the user units (20, 20'), particularly the addresses of the user units (20, 20'),
have provision made for them by at least one database, particularly at least one SQL-based database and/or at least one JDBC-based database.

8. System (100) according to Claim 7, **characterized in that** the database
- is associated with the base unit (10) and/or
- is implemented in the base unit (10).

9. System (100) according to Claim 7 or 8, **characterized in that** the base unit (10) has at least one interface module, particularly Perl-based and/or CGI-based, implemented in it.

10. System (100) according to at least one of Claims 1 to 9, **characterized in that**
- the base unit (10) and/or
- the user unit (20, 20')
are respectively in the form of at least one electronic data processing apparatus.

11. System (100) according to at least one of Claims 1 to 10, **characterized in that** the base unit (10) is in the form of at least one server unit.

12. System (100) according to at least one of Claims 1 to 11, **characterized in that** the user unit (20, 20') is respectively in the form of at least one client unit or in the form of at least one terminal unit.

13. System (100) according to at least one of Claims 1 to 12, **characterized in that** the reading drive (22) and the writing drive (24) are in uniform and/or integral and/or integrated form, particularly in the form of a read/write drive.

14. Method for creating at least one data storage medium holding updated and/or personalized navigation data and information, particularly at least one compact disc or at least one digital versatile disc, having the following steps:
- central navigation data and information are managed, provided and supplied using at least one base unit (10);
- at least one data storage medium holding less up-to-date and/or less personalized navigation data and information is read using at least one reading drive (22) in at least one user unit (20, 20') connected to the base unit (10) via electronic data or communication networks;
- central navigation data and information stored in at least one memory unit (12) in the base unit (10) are compared with the less up-to-date and/or less personalized navigation data and information read out by the reading drive (22) in the user unit (20, 20') using at least one processor unit (14) in the base unit (10);
- difference data and information between the central navigation data and information and the less up-to-date and/or less personalized navigation data and information are created and provided using the processor unit (14);
- the difference data and information are transmitted from the base unit to the user unit (20, 20') via the electronic data or communication networks; and
- the difference data and information are written to the data storage medium which is to be provided with the updated and/or personalized navigation data and information using a writing drive (24) in the user unit (20, 20').

15. Method according to Claim 14, **characterized in that** the user units (20, 20'), particularly the addresses of the user units (20, 20'), are managed using the base unit (10).

16. Method according to Claim 14 or 15, **characterized in that** the central navigation data and information are categorized
- into at least one electronic library associated with the memory unit (12) in the base unit (10) and/or
- into at least one electronic catalogue associated with the memory unit (12) in the base unit (10).

17. Method according to at least one of Claims 14 to 16, **characterized in that** the difference data and information are transferred from the base unit (10) to the user unit (20, 20') at the request of the user unit (20, 20').

18. Method according to at least one of Claims 14 to 17, **characterized in that** the difference data and information are transmitted in the form of at least one file to the user unit (20, 20') via the electronic data or communication networks.

19. Method according to at least one of Claims 14 to 18, **characterized in that** the difference data and information are, at least in part, transmitted from the base unit (10) to the user unit (20, 20')
- on an applet basis and/or on a servlet basis and/or
- on the FTP standard and/or
- on the HTML standard and/or
- on the HTTP standard, particularly on the secure HTTP standard, and/or
- on the SMTP standard and/or
- on the TCP/IP standard.

20. Method according to at least one of Claims 14 to 19, **characterized in that**
- management, provision and supply of the central navigation data and information; and/or
- management of the user units (20, 20'), particularly the addresses of the user units (20, 20'),
have provision made for them by at least one database, particularly at least one SQL-based database and/or at least one JDBC-based database.

21. Method according to Claim 20, **characterized in that** the database
- is associated with the base unit (10) and/or
- is implemented in the base unit (10).

22. Method according to Claim 20 or 21, **characterized in that** the base unit (10) has at least one interface module, particularly Perl-based and/or CGI-based, implemented in it.

23. Method according to at least one of Claims 14 to 22, **characterized in that**
- the base unit (10) and/or
- the user unit (20, 20')
are respectively in the form of at least one electronic data processing apparatus.

24. Method according to at least one of Claims 14 to 23, **characterized in that** the base unit (10) is in the form of at least one server unit.

25. Method according to at least one of Claims 14 to 24, **characterized in that** the user unit (20, 20') is respectively in the form of at least one client unit or in the form of at least one terminal unit.

26. Method according to at least one of Claims 14 to 25, **characterized in that** the reading drive (22) and the writing drive (24) are in uniform and/or integral and/or integrated form, particularly in the form of a read/write drive.

27. Data storage medium holding updated and/or personalized navigation data and information, particularly a compact disc or digital versatile disc, created using a system (100) according to at least one of Claims 1 to 13 and/or using a method according to at least one of Claims 14 to 26.

## Revendications

1. Système (100) pour créer au moins un support de données présentant des données et des informations de navigation actualisées et/ou personnalisées, notamment au moins un disque compact ou au moins un disque numérique versatile, (« Digital Versatile Disc ») présentant :
- au moins une unité de base (10) pour gérer, préparer et délivrer des données et des informations de navigation centrales, laquelle unité de base (10) comporte
- au moins une unité de mémoire (12) et
- au moins une unité de processeur (14), et
- au moins une unité d'utilisateur (20, 20') reliée à l'unité de base (10) via des réseaux électroniques de données ou de communication, pour créer le support de données présentant les données et informations de navigation actualisées et/ou personnalisées, laquelle unité d'utilisateur (20, 20') comporte
- au moins un lecteur de disque (22) pour lire au moins un support de données présentant des données et des informations de navigation moins actuelles et/ou moins personnalisées et
- au moins un graveur de disque (24) pour créer le support de données présentant les données et informations de navigation actualisées et/ ou personnalisées,
dans lequel
l'unité de base (10) est configurée
- pour comparer comme prévu dans l'unité de processeur (14) les données et informations de navigation centrales mémorisées dans l'unité de mémoire (12) de l'unité de base (10) avec les données et informations de navigation moins actuelles et/ou moins personnalisées lues par le lecteur de disque (22) de l'unité d'utilisateur (20, 20'),
- pour créer et présenter comme prévu dans l'unité de processeur (14) des données et informations de différence entre les données et informations de navigation centrales et les données et informations de navigation moins actuelles et/ou moins personnalisées, et
- pour transmettre à l'unité d'utilisateur (20, 20') les données et informations de différence via les réseaux électroniques de données ou de communication, et
l'unité d'utilisateur (20, 20') est configurée pour écrire comme prévu à l'aide du graveur de disque (24) les données et informations de différence sur le support de données devant recevoir les données et informations de navigation actualisées et/ou personnalisées.

2. Système (100) selon la revendication 1,
**caractérisé en ce que**
l'unité de base (10) est configurée pour gérer les unités d'utilisateur (20, 20') notamment les adresses des unités d'utilisateur (20, 20').

3. Système (100) selon la revendication 1 ou 2,
**caractérisé en ce que**
les données et informations de navigation centrales peuvent être classées
- dans au moins une bibliothèque électronique associée à l'unité de mémoire (12) de l'unité de base (10) et/ou
- dans au moins un catalogue électronique associé à l'unité de mémoire (12) de l'unité de base (10).

4. Système (100) selon au moins une des revendications 1 à 3,
**caractérisé en ce que**
les données et informations de différence peuvent être transférées, sur demande de l'unité d'utilisateur (20, 20') depuis l'unité de base (10) jusqu'à l'unité d'utilisateur (20, 20').

5. Système (100) selon au moins une des revendications 1 à 4,
**caractérisé en ce que**
les données et informations de différence peuvent être transmises à l'unité d'utilisateur (20, 20') via les réseaux électroniques de données ou de communication sous la forme d'au moins un fichier.

6. Système (100) selon au moins une des revendications 1 à 5,
**caractérisé en ce que**
la transmission des données et informations de différence depuis l'unité de base (10) jusqu'à l'unité d'utilisateur (20, 20') est
- effectuée au moins partiellement sur la base Applet et/ ou sur la base Servlet et/ ou basée sur
- le standard FTP et/ou
- le standard HTML et/ou
- le standard HTTP, notamment sur le standard HTTP Secure et/ou
- le standard SMTP et/ou
- sur le standard TCP/IP.

7. Système (100) selon au moins une des revendications 1 à 6,
**caractérisé en ce que**
- pour gérer, préparer et délivrer les données et informations de navigation centrales, et/ ou
- pour gérer les unités d'utilisateur (20, 20'), notamment les adresses des unités d'utilisateur (20, 20'),
il est prévu au moins une banque de données, notamment au moins une banque de données de base SQL et/ou au moins une banque de données de base JDBC.

8. Système (100) selon la revendication, 7,
**caractérisé en ce que**
la banque de données
- est associée à l'unité de base (10) et/ ou
- est intégrée dans l'unité de base (10).

9. Système (100) selon la revendication 7 ou 8,
**caractérisé en ce que**
l'unité de base (10) prévoit au moins un module interface, notamment sur la base Perl et/ ou sur la base CGI.

10. Système (100) selon au moins une des revendications 1 à 9,
**caractérisé en ce que**
- l'unité de base (10) et/ou
- l'unité d'utilisateur (20, 20')
est (sont) respectivement configurée(s) comme au moins un dispositif de traitement de données électronique.

11. Système (100) selon au moins une des revendications 1 à 10,
**caractérisé en ce que**
l'unité de base (10) est configurée comme au moins un serveur.

12. Système (100) selon au moins une des revendications 1 à 11,
**caractérisé en ce que**
l'unité d'utilisateur (20, 20') est configurée respectivement comme au moins une unité Client ou comme au moins un terminal.

13. Système (100) selon au moins une des revendications 1 à 12,
**caractérisé en ce que**
le lecteur de disque (22) et le graveur de disque (24) sont configurés en commun et/ou en monobloc et/ou sont intégrés, notamment comme un lecteur-graveur de disque.

14. Procédé pour créer au moins un support de données présentant des données et des informations de navigation actualisées et/ou personnalisées, notamment au moins un disque compact ou au moins un disque numérique polyvalent, présentant les étapes suivantes consistant à :
- gérer, préparer et délivrer des données et des informations de navigation centrales à l'aide d'au moins une unité de base (10) ;
- lire au moins un support de données présentant des données et des informations de navigation moins actuelles et/ou moins personnalisées à l'aide d'au moins un lecteur de disque (22) d'au moins une unité d'utilisateur (20, 20') coopérant avec l'unité de base (10) via des réseaux électroniques de données ou de communication ;
- comparer des données et des informations de navigation centrales mémorisées dans au moins une unité de mémoire (12) de l'unité de base (10) avec les données et informations de navigation moins actuelles et/ou moins personnalisées lues par le lecteur de disque (22) de l'unité d'utilisateur (20, 20') à l'aide d'au moins une unité de processeur (14) de l'unité de base (10) ;
- créer et préparer des données et informations de différence entre les données et informations de navigation centrales et les données et informations de navigation moins actuelles et/ou moins personnalisées à l'aide de l'unité de processeur (14) ;
- transmettre les données et informations de différence depuis l'unité de base (10) jusqu'à l'unité d'utilisateur (20, 20') via les réseaux électroniques de données ou de communication ;
- écrire les données et informations de différence sur le support de données devant recevoir les données et informations de navigation actualisées et/ou personnalisées à l'aide d'un graveur de disque (24) de l'unité d'utilisateur (20, 20').

15. Procédé selon la revendication 14,
**caractérisé en ce que**
les unités d'utilisateur (20, 20'), notamment les adresses des unités d'utilisateur (20, 20'), sont gérées à l'aide de l'unité de base (10).

16. Procédé selon la revendication 14 ou 15,
**caractérisé en ce que**
les données et informations de navigation centrales peuvent être classées
- dans au moins une bibliothèque électronique associée à l'unité de mémoire (12) de l'unité de base (10) et/ou
- dans au moins un catalogue électronique associé à l'unité de mémoire (12) de l'unité de base (10).

17. Procédé selon au moins une des revendications 14 à 16,
**caractérisé en ce que**
les données et informations de différence peuvent être transférées, sur demande de l'unité d'utilisateur (20, 20') depuis l'unité de base (10) jusqu'à l'unité d'utilisateur (20, 20').

18. Procédé selon au moins une des revendications 14 à 17,
**caractérisé en ce que**
les données et informations de différence peuvent être transmises à l'unité d'utilisateur (20, 20') via les réseaux électroniques de données ou de communication sous la forme d'au moins un fichier.

19. Procédé selon au moins une des revendications 14 à 18,
**caractérisé en ce que**
les données et informations de différence sont transmises au moins partiellement depuis l'unité de base (10) jusqu'à l'unité d'utilisateur (20, 20') sur
- la base Applet et/ou la base Servlet et/ou
- le standard FTP et/ou
- le standard HTML et/ ou
- le standard HTTP, notamment le standard HTTP Secure et/ou
- le standard SMTP et/ou
- le standard TCP/IP.

20. Procédé selon au moins une des revendications 14 à 19,
**caractérisé en ce que**
- pour gérer, préparer et délivrer les données et informations de navigation centrales ; et/ou
- pour gérer les unités d'utilisateur (20, 20'), notamment les adresses des unités d'utilisateur (20, 20'),
il est prévu au moins une banque de données, notamment au moins une banque de données de base SQL et/ou au moins une banque de données de base JDBC.

21. Procédé selon la revendication 20,
**caractérisé en ce que**
la banque de données est
- associée à l'unité de base (10) et/ou
- intégrée dans l'unité de base (10).

22. Procédé selon la revendication 20 ou 21,
**caractérisé en ce que**
l'unité de base (10) prévoit au moins un module interface, notamment sur la base Perl et/ou sur la base CGI.

23. Procédé selon au moins une des revendications 14 à 22,
**caractérisé en ce que**
- l'unité de base (10) et/ou
- l'unité d'utilisateur (20, 20')
est (sont) respectivement configurée(s) comme au moins un dispositif de traitement de données électronique.

24. Procédé selon au moins une des revendications 14 à 23,
**caractérisé en ce que**
l'unité de base (10) est configurée comme au moins un serveur.

25. Procédé selon au moins une des revendications 14 à 24,
**caractérisé en ce que**
l'unité d'utilisateur (20, 20') est configurée respectivement comme au moins une unité Client ou comme au moins un terminal.

26. Procédé selon au moins une des revendications 14 à 25,
**caractérisé en ce que**
le lecteur de disque (22) et le graveur de disque (24) sont configurés en commun et/ou en monobloc et/ou sont intégrés, notamment comme un lecteur-graveur de disque.

27. Support de données présentant des données et des informations de navigation actualisées et/ou personnalisées, notamment un disque compact ou un disque numérique versatile, créé avec un système (100) selon au moins une des revendications 1 à 13 et/ ou à l'aide d'un procédé selon au moins une des revendications 14 à 26.
